(19) **Europäisches Patentamt / European Patent Office / Office européen des brevets**

(11) **EP 4 775 287 A1**

(12) **EUROPEAN PATENT APPLICATION**
published in accordance with Art. 153(4) EPC

(43) Date of publication:
15.07.2026 Bulletin 2026/29

(21) Application number: 24863233.3

(22) Date of filing: 05.09.2024

(51) International Patent Classification (IPC):
**B01D 15/10** (2006.01)  **C02F 1/46** (2023.01)
**C08G 73/02** (2006.01)

(52) Cooperative Patent Classification (CPC):
(C-Sets available)
**B01J 20/28016; B01J 20/262; B01J 20/28004; B01J 20/3293; B01J 20/3425; B01J 20/3441; C01F 11/183; C02F 1/285; C04B 20/107; C04B 28/02; C08G 73/028;** C02F 2101/10; C02F 2103/08; C02F 2303/16  (Cont.)

(86) International application number:
**PCT/KR2024/013449**

(87) International publication number:
**WO 2025/053654 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 05.09.2023 KR 20230117804
04.09.2024 KR 20240120393

(71) Applicants:
• POSTECH Research and Business Development Foundation
Pohang-si, Gyeongsangbuk-do 37673 (KR)
• Bluecaborn Co, Ltd
Pohang-si, Gyeongsangbuk-do 37673 (KR)

(72) Inventors:
• HWANG, Dong Soo
Pohang-si Gyeongsangbuk-do 37673 (KR)
• YI, Gi-Ra
Pohang-si Gyeongsangbuk-do 37673 (KR)
• LEE, Kanghun
Pohang-si Gyeongsangbuk-do 37836 (KR)
• JANG, Sookyeong
Pohang-si Gyeongsangbuk-do 37656 (KR)
• KIM, Keon
Pohang-si Gyeongsangbuk-do 37548 (KR)

(74) Representative: Jung, Minkyu
Wuesthoff & Wuesthoff
Patentanwälte und Rechtsanwalt PartG mbB
Schweigerstraße 2
81541 München (DE)

(54) **METHOD FOR CONTINUOUSLY PRODUCING CARBON DIOXIDE-CAPTURING COMPOSITE PARTICLES**

(57) The present invention relates to a method for continuously producing carbon dioxide-capturing composite particles, the method, in a process for using seawater as usable water, i.e., in a process for turning seawater into usable water, fixing carbon dioxide through the mineralization of ions in the seawater which is supply water or discharge water in the process, thereby contributing to carbon neutrality.

[FIG. 1]

**(Cont. next page)**

(52) Cooperative Patent Classification (CPC): (Cont.)

C-Sets
**C04B 20/107, C04B 18/20;**
**C04B 28/02, C04B 18/20;**
**C04B 28/02, C04B 20/107**

## Description

### [Technical Field]

The present invention relates to a continuous preparation method of composite particles for capturing carbon dioxide which, in a process of using sea water as water, that is, a process of converting sea water into water, contribute to carbon neutrality by fixing carbon dioxide through mineralization of ions in sea water which is supply water or effluent water of the process.

### [Background Art]

Petrochemical consumption in modern society leads to massive carbon emissions in the atmosphere, and global climate crisis is caused due to the produced carbon dioxide. In order to solve the problem, advances in technology to effectively capture the produced carbon dioxide are essential together with efforts to reduce petrochemical production and consumption.

Conventionally, a monoethanolamine (MEA) aqueous solution has been used for adsorbing carbon dioxide, but there are demerits of corrosion of equipment and toxic vapor production when using the aqueous solution and high temperature required when reforming the adsorbed carbon dioxide. In addition, though there were attempts to adsorb carbon dioxide gas using inorganic substances such as zeolite, adsorbents containing polyethylene imine (PEI), porous carbon, and metal organic framework (MOF), or the like, moisture and temperature in the air have a big influence, and high pressure and high temperature are required for efficient adsorption. Among previously known adsorbents, MOF/GO-U3 is known to have the highest carbon dioxide adsorption efficiency, which is around 186 mg/g.

However, a technology for adsorbing and removing carbon dioxide in water has not been developed. Furthermore, indiscriminately discharged industrial wastewater or concentrated water discharged after sea water treatment includes ions such as a carbonate ion or carbon dioxide at a high concentration, but there is no proper method for simply and effectively removing them.

### [Disclosure]

### [Technical Problem]

An object of the present invention is to provide a continuous preparation method of composite particles for capturing carbon dioxide, which may be safer, more convenient to use, and continuously carried out in a process as compared with a previously known process using a carbon dioxide adsorbent.

Another object of the present invention is to provide a continuous preparation method of composite particles for capturing carbon dioxide which may continuously capture and discharge carbon dioxide in a particle form only by adding a simple process without an excessive cost burden in a conventional process of converting sea water into water.

### [Technical Solution]

In order to achieve the above objects, the present inventors continuously studied in order to develop a method of continuously adsorbing and removing carbon dioxide in water using sea water, and as a result, found out that when polyamidoamine particles having a specific structure is brought into contact with sea water during a specific residence time in a process of using sea water as water, carbon dioxide, carbonate ions, or the like may be continuously removed by a very simple method without an excessive cost increase, thereby completing the present invention.

In one general aspect, a continuous preparation method of composite particles for capturing carbon dioxide including a process of using sea water as water includes: bringing supply water or effluent water of the process into contact with polyamidoamine particles.

According to an exemplary embodiment, the step of bringing supply water or effluent water into contact with polyamidoamine particles may include: (a) bringing supply water or effluent water into contact with polyamidoamine particles; and (b) forming calcium carbonate particles from calcium ions and carbonate ions in the supply water or effluent water on a surface of the polyamidoamine particles.

According to an exemplary embodiment, the supply water or effluent water may include calcium ions and magnesium ions.

According to an exemplary embodiment, the supply water or effluent water may include the calcium ion at a concentration of 0.1 g/L or more.

According to an exemplary embodiment, the polyamidoamine particles may be crosslinked particles prepared from a multifunctional amine monomer having at least two amine groups and a multifunctional acrylamide monomer having at least two acryl groups.

According to an exemplary embodiment, the polyamidoamine particles may be prepared by reacting the multifunctional amine monomer and the multifunctional acrylamide monomer at a mole ratio of 1:0.8 to 2.5.

According to an exemplary embodiment, the multifunctional amine monomer may contain two primary amine groups and the multifunctional acrylamide monomer may contain two acryl groups.

According to an exemplary embodiment, the contact may be any one selected from the following methods:

(i) filtering the supply water or effluent water in a column filled with the polyamidoamine particles,
(ii) dispersing the polyamidoamine particles in the supply water or effluent water, and
(iii) floating the polyamidoamine particles on a surface of the supply water or effluent water.

According to an exemplary embodiment, the column may be filled with the polyamidoamine particles at a density of 1 to 50 $g/m^3$ (L).

According to an exemplary embodiment, the contact may satisfy a weight hourly space velocity (WHSV) depending on an amount of the polyamidoamine particles in a range of 5 to 10000/hr.

According to an exemplary embodiment, the polyamidoamine particles may have a particle size of 10 to 1000 $\mu$m.

According to an exemplary embodiment, in the step of bringing supply water or effluent water into contact with polyamidoamine particles, injecting carbon dioxide into the supply water or effluent water may be further carried out.

According to an exemplary embodiment, polyamidoamine-calcium carbonate composite particles in which calcium carbonate particles are formed on the surface of the polyamidoamine particles may be formed by the process of (b).

According to an exemplary embodiment, removing calcium carbonate from the surface with an ultrasonic grinder may be further carried out after (b).

According to an exemplary embodiment, an amount of carbon dioxide removed per 24 hours ($M_{CO2-24h}$) with respect to 100 g of the polyamidoamine particles may be 1 g/24 h or more.

According to an exemplary embodiment, the process may include any one or more selected from the group consisting of a sea water desalination process, an industrial cooling water process, an aquaculture process, an agricultural irrigation process, and the like.

In another general aspect, an automotive reinforcement includes composite particles for capturing carbon dioxide prepared by the continuous preparation method of composite particles for capturing carbon dioxide described above.

In still another general aspect, building cement includes composite particles for capturing carbon dioxide prepared by the continuous preparation method of composite particles for capturing carbon dioxide described above.

## [Advantageous Effects]

The continuous preparation method of composite particles for capturing carbon dioxide according to an exemplary embodiment of the present invention may be simply applied to a process of using sea water to continuously convert carbonate ions and carbon dioxide in sea water into resources. When the continuous preparation method of composite particles for capturing carbon dioxide is used, an excellent carbon dioxide reduction effect may be implemented only by adding a simple process and equipment without an excessive cost burden in a conventional sea water treatment process.

## [Description of Drawings]

FIG. 1 is a schematic diagram which roughly shows a process sequence of the continuous preparation method of composite particles for capturing carbon dioxide according to an exemplary embodiment.
FIG. 2 is a schematic diagram which roughly shows process equipment of the continuous preparation method of composite particles for capturing carbon dioxide according to an exemplary embodiment.
FIG. 3 is a schematic diagram which roughly shows a reactor of the composite particles for capturing carbon dioxide according to an exemplary embodiment.
FIG. 4 is an SEM analysis image of the polyamidoamine particles prepared in Preparation Example 1.
FIG. 5 is SEM analysis images in which a surface of composite particles for capturing carbon dioxide in which calcium carbonate mineral was formed on the surface of the polyamidoamine particles prepared in Preparation Examples 2 to 5 was observed.
FIG. 6 is a TGA analysis graph of composite particles for capturing carbon dioxide obtained in a filter over time after completing a mineralization reaction in Example 1.

FIG. 7 is an XRD analysis graph of composite particles for capturing carbon dioxide obtained in a filter over time after completing a mineralization reaction in Example 1.

**[Best Mode]**

Hereinafter, the present invention will be described in more detail. However, the following specific examples or exemplary embodiments are only a reference for describing the present invention in detail, and the present invention is not limited thereto, and may be implemented in various forms.

In addition, unless otherwise defined, all technical terms and scientific terms have the same meanings as those commonly understood by one of those skilled in the art to which the present invention pertains. The terms used herein are only for effectively describing a certain specific example and are not intended to limit the present invention.

In addition, the singular form used in the specification and claims appended thereto may be intended to include a plural form also, unless otherwise indicated in the context.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present invention, values which may be outside a numerical range due to experimental error or rounding off of a value are also included in the defined numerical range.

The term "comprise" in the present specification is an open-ended description having a meaning equivalent to the term such as "is/are provided", "contain", "have", or "is/are characterized", and does not exclude elements, materials, or processes which are not further listed.

In addition, the term "substantially" in the present specification means that other elements, materials, or processes which are not listed together with specified elements, materials, or processes may be present in an amount or extent which does not have an unacceptably significant effect on at least one basic and novel technical idea of the invention.

In addition, the term water (water available for use) in the present specification refers to water for use in fire protection, irrigation, industry, power generation, beverages, and the like, and, for example, may be industrial water such as agricultural water, fishing water, and manufacturing industrial water, environmental water, swimming water, living water, and the like without limitation, but is not limited thereto.

In addition, the term "process of using sea water as water" in the present specification refers to a comprehensive process in which sea water is used as the water defined above, and, as an example, may be a sea water desalination process, an industrial cooling water process, an aquaculture process, an agricultural irrigation process, and the like, but is not limited thereto.

Hereinafter, an embodiment of the continuous preparation method of composite particles for capturing carbon dioxide of the present invention will be described in more detail.

The present invention provides a continuous preparation method of composite particles for capturing carbon dioxide including a process of using sea water as water includes: bringing supply water or effluent water of the process into contact with polyamidoamine particles (hereinafter, referred to as a contact step).

According to an exemplary embodiment, the process includes all overall processes for use sea water supplied from the ocean as water such as industrial water such as agricultural water, fishing water, and manufacturing industrial water, environmental water, swimming water, and living water, and as an example, may include any one or more selected from the group consisting of a sea water desalination process, an industrial cooling water process, an aquaculture process, an agricultural irrigation process, and the like.

According to an exemplary embodiment, the sea water may be any one or a mixture of two or more selected from the group consisting of normal sea water, sea water-desalinated concentrated water, brine, bittern, and the like. Artificial sea water which is an aqueous solution in which calcium ions are dissolved for replacing the sea water may be optionally used for testing purpose, and specifically, the sea water may have a $Ca^{2+}$ concentration of 0.04 g/L-water or more and a $CO_3^{2-}$ concentration of 0.02 g/L-water or more.

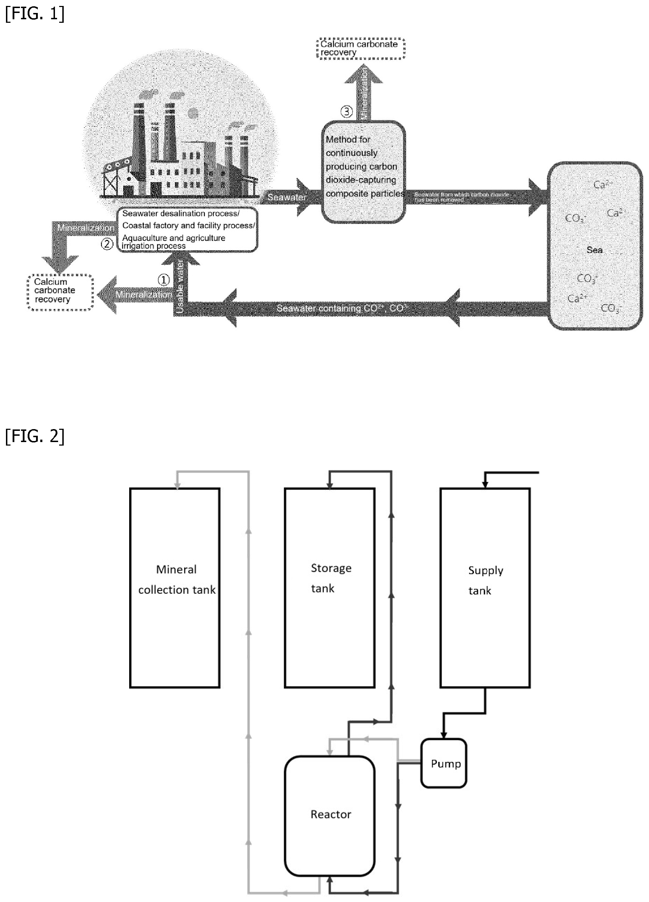

According to an exemplary embodiment, the continuous preparation method of composite particles for capturing carbon dioxide may include a step of bringing the supply water and the polyamidoamine particles into contact of the above process. Herein, the contact step may be carried out during the process as in ① of FIG. 1.

According to an exemplary embodiment, the continuous preparation method of composite particles for capturing carbon dioxide may include a step of bringing the supply water and the polyamidoamine particles into contact of the above process. Herein, the contact step may be carried out before the process as in ② of FIG. 1.

According to an exemplary embodiment, the continuous preparation method of composite particles for capturing carbon dioxide may include a step of bringing the effluent water and the polyamidoamine particles into contact of the above process. Herein, the contact step may be carried out after the process as in ③ of FIG. 1.

According to another exemplary embodiment, the continuous preparation method of composite particles for capturing carbon dioxide may include a step of bringing the supply water and effluent water into contact with the polyamidoamine particles of the above process. Herein, the contact step may be carried out before and after the process as in the case of carrying out ① through ③ of FIG. 1.

Herein, sea water added from ocean in the course of carrying out the process is defined as supply water, and sea water or water discharged after carrying out the process is defined as effluent water.

According to an exemplary embodiment, the supply water or effluent water may include metal ions which are generally contained in sea water, and specifically, may include calcium ions and magnesium ions. The supply water or effluent water may include the calcium ion at a concentration of 0.1 g/L-water or more, 0.1 to 10 g/L, or 0.2 to 5 g/L. When the supply water is normal sea water, the concentration of the calcium ion is not high, but when the effluent water is concentrated water, it may have a significantly high calcium ion concentration. In this case, it may have a calcium ion concentration of 0.5 g/L or more but is not limited thereto.

According to an exemplary embodiment, the supply water or effluent water may contain carbonate ions formed by carbon dioxide dissolved in sea water. The supply water or effluent water may have a carbonate ion concentration of 10 mg/L or more, 20 mg/L to 5 g/L, or 50 mg/L to 2 g/L, but is not limited thereto.

According to an exemplary embodiment, the polyamidoamine particles are crosslinked particles having a hyperbranched structure and more preferably, include an amine and amide bond (or a peptide bond) for forming calcium carbonate. The hydrolysis of amide allows the polyamidoamine particles to be decomposed in water. The polyamidoamine particles may be usually easily hydrolyzed and decomposed at 37°C within 2 weeks and completely decomposed within 3 months. However, when the polyamidoamine particles are continuously brought into contact with sea water, the polyamidoamine particles are partially decomposed and swollen, and calcium carbonate particle or calcite-type calcium carbonate particles are formed in nano-sized pores formed on the surface of the swollen polyamidoamine particles, so that the composite particles for capturing carbon dioxide may continuously grow. That is, as the polyamidoamine particles are decomposed, an amine derivative is produced on the surface, and under the conditions of pH 8 or more resulting therefrom, a carbonate ion concentration increases to create an environment where calcium carbonate is easily formed. In addition, it is considered that the amine functional group of the decomposed polyamidoamine particles captures the calcium ion, and the ammonium functional group captures the carbonate ion to locally increase the concentration of mutual ions, so that calcium carbonate is mineralized on the surface of the polyamidoamine particles. In addition, it is considered that calcium carbonate particles are formed and grow in the nano-sized pores formed on the surface of the polyamidoamine particles with swelling. Accordingly, a very surprising effect of producing a large amount of stable calcium carbonate particles in bulk sea water at room temperature under normal pressure may be provided.

According to an exemplary embodiment, when the polyamidoamine particles are brought into contact with sea water, a condition of pH 7 to 10, pH 8 or more, or pH 8 to 10 is formed without adding a separate base, so that calcium carbonate particles, more specifically calcite-type calcium carbonate particles are formed, but the present invention is not limited thereto. In addition, the higher the concentration of the polyamidoamine particle in sea water is, the faster the growth rate of calcite is, and it may be formed better under the condition of pH 8 or more. Therefore, if necessary, a step of further adding a basic material to adjust the pH to 8 or more may be further included, but the concentration of the polyamidoamine particle in sea water may be adjusted without adding a separate basic material.

According to an exemplary embodiment, the polyamidoamine particles may be crosslinked particles prepared from a multifunctional amine monomer having at least two amine groups and a multifunctional acrylamide monomer having at least two acryl groups.

According to an exemplary embodiment, a method for preparing the polyamidoamine particles may include: preparing a polyamidoamine precursor aqueous solution from a multifunctional amine monomer and a multifunctional acrylamide monomer; and carrying out reverse phase suspension polymerization of the polyamidoamine precursor aqueous solution to obtain crosslinked polyamidoamine particles.

The multifunctional amine monomer and the multifunctional acrylamide monomer may produce the polyamidoamine precursor mixture by a Michael addition reaction in which a nitrogen atom of amine reacts with carbon of an acryl group of acrylamide. In addition, the Michael addition reaction may also be used in the crosslinking reaction for preparing hyperbranched polyamidoamine particles in a reverse phase suspension polymerization method.

According to an exemplary embodiment, the polyamidoamine precursor aqueous solution corresponds to an intermediate for producing crosslinked hyperbranched polyamidoamine particle from the multifunctional amine monomer and the multifunctional acrylamide monomer and is a mixture formed of an oligomeric monomolecule. For example, the polyamidoamine precursor mixture may include an oligomer obtained by reacting one amine monomer and one acrylamide monomer, an oligomer obtained by reacting two amine monomers and one acrylamide monomer, an oligomer obtained by reacting one amine monomer and two acrylamide monomers, an oligomer obtained by reacting two amine monomers and two acrylamide monomers, an oligomer obtained by reacting three amine monomers and two acrylamide monomers, an oligomer obtained by reacting two amine monomers and three acrylamide monomers, and the like.

According to an exemplary embodiment, when an alkylenediamine (A) and a bis-acrylamide monomer (B) are used as an amine compound and acrylamide compounds, in the case of preparing a polyamidoamine precursor mixture using each monomer, a linear oligomer compound such as A-B, A-B-A, B-A-B, A-BA-B, B-A-B-A, A-B-A-B-A, and B-A-B-A-B may be obtained, and the polyamidoamine precursor compound may refer to a mixture thereof.

According to an exemplary embodiment, in the case of the alkylenediamine, one amine group may undergo the Michael addition reaction twice with the acrylamide, and thus, an oligomer compound in a branch form in which two acrylamides are bonded to one amine group as well as the linear oligomer compound may be obtained, and the polyamidoamine precursor mixture may include this case also.

According to an exemplary embodiment, the multifunctional amine monomer may include at least two amine groups in one monomer. That is, it may be diamine, triamine, or polyamine having two or more amine groups at the end of an alkylene group and may include an amine group instead of a hydrogen atom in the middle of the alkylene group or have an alkyl group including an amine group substituted with hydrogen in the middle of the alkylene group. In the case of the diamine, since one amine group of a primary diamine may undergo the Michael addition reaction with two acrylamides, an additional crosslinking reaction may be performed.

According to an exemplary embodiment, the multifunctional amine monomer may be C1-10 alkylenediamine, C1-7 alkylenediamine, C1-5 alkylenediamine, or C3-5 alkylenediamine.

According to an exemplary embodiment, the multifunctional amine monomer may be ethylenediamine, 1,2-diaminopropane, 1,4-diaminobutane, hexamethylenediamine, diethylenetriamine, triethylenetetramine, tris(2-aminoethyl)amine, diaminocyclohexane, pentaethylenehexamine, 2-aminoethylenepyperizine, and the like, and preferably, may be ethylenediamine, 1,4-butylenediamine, diethylenetriamine, and the like, without limitation.

According to an exemplary embodiment, the multifunctional acrylamide monomer may have 2 or more, 2 to 5, 2 to 4, or 2 or 3 acryl groups in one monomer, and the preferred number of acryl groups of the multifunctional acrylamide monomer may be 2 to 5, 2 to 4, 2, or 3.

According to an exemplary embodiment, the multifunctional amine monomer may be a diamine having two primary amine groups in one monomer, and the multifunctional acrylamide monomer may include two acryl groups in one monomer.

According to an exemplary embodiment, an example of the multifunctional acrylamide monomer may be N,N'-methylenebisacrylamide, N,N'-(1,2-dihydroxyethylene)bisacrylamide, N,N'-ethylenebisacrylamide, ethylenegylcol dimethacrylate, ethylenegylcoldiacrylate, diethylenegylcol dimethacrylate, diethylenegylcol diacrylate, triethylenegylcol dimethacrylate, triethylenegylcol diacrylate, and the like, and preferably, may be N,N'-methylenebisacrylamide or N,N'-ethylenebisacrylamide without limitation.

According to an exemplary embodiment, the step of preparing the polyaminoamine precursor mixture may be easily carried out by selecting a monomer having a difference in solubility in water between the monomers, when they are reacted in an aqueous solution state. That is, a monomer having a large difference in solubility in water is first dissolved in water to make an aqueous solution state, and then even in the case of adding a monomer which is poorly soluble in water all at once, the monomer which is poorly soluble in water has low solubility in water and eventually, may produce the effect shown when the monomer poorly soluble in water is slowly added to an aqueous solution in which a monomer highly soluble in water is dissolved.

According to an exemplary embodiment, for example, when the polyamidoamine precursor mixture is prepared by the Michael addition reaction of ethylenediamine and N,N'-methylenebisacrylamide, the ethylenediamine may exist in a state of being highly soluble in an aqueous solution, as a B4 monomer which is dissolved in water very well. However, since N,N'-methylenebisacrylamide which is an A2 monomer is not dissolved well in water, even when N,N'-methylenebisacrylamide is added to the ethylenediamine aqueous solution all at once, all of the N,N'-methylenebisacrylamide does not react with ethylenediamine all at once due to a difference in solubility in water, and at the beginning of the reaction, ethylenediamine is present in the absolutely large number in the aqueous solution, and thus, most of the ends of the polyamidoamine precursor mixture includes the amine group.

Thereafter, as the reaction proceeds continuously, methylenebisacrylamide is slowly dissolved and the Michael addition polymerization reaction continues to proceed, so that a hyperbranched polyamidoamine precursor mixture is continuously prepared.

According to an exemplary embodiment, in the preparation of the crosslinked hyperbranched polyamidoamine particles, a crosslinking degree may be adjusted by changing each mole ratio of the multifunctional monomer without using an additional crosslinking agent.

According to an exemplary embodiment, the multifunctional amine monomer and the multifunctional acrylamide monomer may be at a mole ratio of 1:0.5 to 5, 1:0.6 to 3.0, 1:0.8 to 2.5, 1:0.8 to 2.0, 1:0.8 to 1.5, or 1:0.9 to 1.2. When the mole ratio is satisfied, a predominant amount of calcium carbonate particles, an amount of carbon dioxide captured per gram of the polyamidoamine particle, and an amount of carbon dioxide removed per 24 hours with respect to 100 g of the polyamidoamine particle may be shown.

According to an exemplary embodiment, a polyamidoamine precursor is dispersed in an organic solvent at a volume of 2 to 20 times with or without a stabilizer, and then reverse phase suspension polymerization may be carried out at 30 to 80°C. As an example, when the aqueous solution of the polyamidoamine precursor mixture is dispersed in a solvent which is not mixed in water well, such as toluene or cyclohexane, using an appropriate stabilizer, reverse phase suspension polymerization may be performed, and as the polymerization reaction proceeds, crosslinking occurs, and size controlled hyperbranched polyamidoamine particles may be prepared.

According to an exemplary embodiment, the solvent used in the reverse phase suspension polymerization may be any one selected from alkane having 5 to 12 carbon atoms, cycloalkane having 5 to 12 carbon atoms, and aromatic hydrocarbon having 6 to 12 carbon atoms, and the stabilizer may be any one or a combination of two or more selected from sorbitan esters of fatty acids including span 60 and span 80, 12-butinoyloxy-9-octadecenate, poly(hydroxy stearic acid)-copoly(ethylene oxide) block copolymers, and the like.

According to an exemplary embodiment, the reverse phase suspension polymerization may be a reaction at 40 to 50°C for 2 to 5 hours but is not limited thereto.

According to an exemplary embodiment, the polyamidoamine particles may have a particle size (average particle diameter) of 1 $\mu$m to 2000 $\mu$m, 10 to 1000 $\mu$m, 10 $\mu$m to 500 $\mu$m, 20 $\mu$m to 200 $\mu$m, or 30 $\mu$m to 100 $\mu$m, but is not limited thereto, and the particle size may be easily adjusted for adjusting carbon dioxide capture performance. In addition, the polyamidoamine particles may have a PDI of 2 or less, 1.5 or less, 1 to 1.2, or 1 to 1.1.

According to an exemplary embodiment, the contact step may include: (a) bringing supply water or effluent water into contact with polyamidoamine particles; and (b) forming calcium carbonate particles from calcium ions and carbonate ions in the supply water or effluent water on a surface of the polyamidoamine particles.

According to an exemplary embodiment, the contact in step (a) may be used without particular limitation as long as it is a means for bringing the supply water or effluent water into contact with the polyamidoamine particles, and may be any one selected from the following methods:

> (i) filtering the supply water or effluent water in a column filled with the polyamidoamine particles,
> (ii) dispersing the polyamidoamine particles in the supply water or effluent water, and
> (iii) floating the polyamidoamine particles on a surface of the supply water or effluent water.

The method (i) is a method of preparing a column (or a container such as a reactor and filter) filled with the polyamidoamine particles and flowing the supply water or effluent water into the column to perform filtration, and may be a contact method appropriate for carrying out a continuous process. In the filtration method process, a process for imparting flowability to the supply water or effluent water in the column, for example, stirring, sonication, and the like may be optionally further carried out.

According to an exemplary embodiment, the column may be filled with the polyamidoamine particles at a density of 1 to 200 g/m$^3$, 1 to 50 g/m$^3$, or 3 to 30 g/m$^3$, but is not limited thereto, and the filling density of the polyamidoamine particles may be easily adjusted depending on a process scale or a column size.

According to an exemplary embodiment, the contact may be bringing the supply water or effluent water into contact with the column in which the polyamidoamine particles are present at the density per unit volume of 2 to 20 g/m$^3$, 3 to 15 g/m$^3$, or 5 to 8 g/m$^3$ at a flow rate of 0.1 to 200 L/h for a residence time (h) of 30 minutes or more, at a flow rate of 0.5 to 100 L/h for a residence time of 1 hour to 60 hours, or at a flow rate of 0.5 to 20 L/g for a residence time of 1 hour to 36 hours, based on a 4 L reactor. Herein, the residence time refers to a time it takes from when the supply water is added until the supply water is brought into contact with polyamidoamine particles and discharged. When the range is satisfied, the production efficiency or carbon dioxide removal efficiency of the composite particles for capturing carbon dioxide may be higher.

According to an exemplary embodiment, the contact may satisfy a weight hourly space velocity (WHSV) according to the amount of polyamidoamine particles (catalyst) in a range of 5 to 10000/hr, 5 to 1000/hr, 10 to 500/hr, or 20 to 200/hr. Herein, calculation is performed at the flow rate of sea water of 1 kg/hr = 1 L/hr:

$$\text{WHSV} = \text{flow rate of sea water (mass) (kg/hr)/mass of catalyst (kg)}.$$

According to an exemplary embodiment, the contact may satisfy a liquid hourly space velocity (LHSV) according to a reactor volume in a range of 0.01 to 100/hr, 0.1 to 50/hr, 0.1 to 10/hr, or 0.2 to 5/hr:

$$\text{LHSV} = \text{flow rate of sea water (m}^3\text{/hr or L/hr)/reactor volume (m}^3 \text{ or L)}.$$

In the method (i), when the surface of the polyamidoamine particles in the column is sufficiently covered with calcium carbonate, it is preferred to replace it, and a replacement cycle may be easily adjusted depending on the type of process or the sea water concentration.

In addition, in the method (i), a step of mounting a separate ultrasonic grinder in the column and removing calcium carbonate from the surface may be further carried out. In this case, the life of the polyamidoamine particles which is a catalyst is significantly improved and the replacement cycle is increased, which is economically favorable.

The method (ii) may be performed according to a common dispersion method of solid particles in a liquid and may be uniform dispersion after adding the polyamidoamine particles to the supply water or effluent water. After the dispersion, the polyamidoamine particles may be recovered after a certain period of time. In the dispersion method process, a process for imparting flowability to the supply water or effluent water, for example, stirring, sonication, and the like may be optionally further carried out.

The method (iii) may be used when the density of the polyamidoamine particles is lower than the density of the supply water or effluent water and is a method of floating the polyamidoamine particles on the surface of the supply water or effluent water. A common floating method may be used, and the particles may be recovered again after a certain period of time has passed since floating. In the floating method process, a process for imparting flowability to the supply water or effluent water, for example, stirring, sonication, and the like may be optionally further carried out.

According to an exemplary embodiment, in the step of bringing supply water or effluent water into contact with polyamidoamine particles, injecting carbon dioxide into the supply water or effluent water may be further carried out. The carbon dioxide may be injected as gas and may be ionized into a carbonate ion in sea water and mineralized with a calcium ion.

According to an exemplary embodiment, polyamidoamine-calcium carbonate composite particles in which calcium carbonate particles are formed on the surface of the polyamidoamine particles may be formed by the process of (b).

The calcium carbonate may have three dimorphisms of calcite, aragonite, and vaterite. Among them, calcite-type calcium carbonate has a trigonal structure and is in a thermally and chemically stable form as compared with other crystallite forms. In particular, it is not transformed in a high temperature environment which is thus industrially favorable, is used as a filler and a coating agent of plastics, rubber, coatings, paper, and the like due to its high purity and excellent optical characteristics and has excellent reflection and refraction properties of light. In addition, since calcite has low solubility in water, it may be preferred in construction industry requiring durability and stability.

According to an exemplary embodiment, the calcium carbonate particles in the process (b) may be calcite-type calcium carbonate particles. The calcite-type calcium carbonate particles may be formed to cover 5% or more, 5 to 100%, 10% or more, or 10% to 90% of the surface of the polyamidoamine particles, and a degree of calcium carbonate particle distribution on the surface of the polyamidoamine particles may be easily measured using a common crystallinity analysis method such as X-ray diffraction (XRD) but is not limited thereto.

According to an exemplary embodiment, removing calcium carbonate from the surface with an ultrasonic grinder may be further carried out after step (b). In this case, the life of the polyamidoamine particles which are a catalyst is significantly improved, and the replacement cycle is increased, which is economically favorable.

According to an exemplary embodiment, the amount of calcium carbonate produced for 1 day (per 24 hours) ($M_{CaCO3-24h}$) may be 1 g/24 h or more, 1 to 2000 g/24 h, or 10 to 1000 g/24 h with respect to 100 g of the polyamidoamine particles and may be easily adjusted according to the process conditions.

According to an exemplary embodiment, the amount of carbon dioxide removed per 24 hours ($M_{CO2-24h}$) may be 1 g/24 h or more, 1 to 500 g/24 h, or 10 to 200 g/24 h with respect to 100 g of the polyamidoamine particles, and may be easily adjusted according to the process conditions.

According to an exemplary embodiment, the process may include any one or more selected from the group consisting of a sea water desalination process, an industrial cooling water process, an aquaculture process, an agricultural irrigation process, and the like.

The present invention may provide composite particles for capturing carbon dioxide prepared according to the continuous preparation method of composite particles for capturing carbon dioxide. The composite particles for capturing carbon dioxide are the same as the polyamidoamine-calcium carbonate composite particles and formed by the calcium carbonate particles on the surface of the polyamidoamine particles, and the calcite-type calcium carbonate particles may meet each other on the surface of the polyamidoamine particles and grow. In addition, when the composite particles come into contact with sea water again, their catalytic role may be recovered and activated again.

The composite particles for capturing carbon dioxide of the present invention may be used by replacing the conventional calcium carbonate. Conventional calcium carbonate ($CaCO_3$) is widely used in various industrial fields such as building materials, paper, plastics, food, pharmaceuticals, environment, chemicals, and agriculture. As the building materials, it is used in cement, concrete, stone, and marble, and in the paper industry, it is used as a filler and a coating agent for improving the gloss and texture of paper. It is used as a filler in the plastic industry and automotive material industry.

The present invention may provide an automotive reinforcement including the composite particles for capturing carbon dioxide described above. According to the conventional legal regulations which essentially include recycled materials in the automotive reinforcement, the automotive reinforcement is filled with the composite particles described above having high strength to implement both environmental friendliness and economic feasibility.

The present invention may provide building cement including the composite particles for capturing carbon dioxide described above. Conventional building cement has a side effect of having weakened strength when brought into contact with sea water, but when construction is performed using the building cement composition or building cement including the composite particles for capturing carbon dioxide described above, particles are regenerated into a catalyst even when brought into contact with sea water and form calcite-type calcium carbonate from carbonate ions or calcium ions in the sea water to improve cement strength, and since it is a recycled material, environmental friendliness and economic feasibility may be implemented.

Hereinafter, the present invention will be described in more detail with reference to the examples and the comparative examples. However, the following examples and comparative examples are only an example for describing the present invention in more detail, and do not limit the present invention in any way.

<Evaluation of physical properties>

1. Amount of mineralized carbon dioxide

In order to calculate the amount of calcium carbonate particles ($CaCO_3$) formed on the surface of the polyamidoamine particles of the composite particles, thermogravimetry (TG), derivative thermogravimetry (DTG), and differential thermal analysis (DTA) were obtained using a thermogravimetric analyzer (TGA, Pyris 1, Perkin Elmer, USA), and among them, a thermogravimetric (TG) graph which is a graph of weight change depending on temperature was analyzed to derive ratios of a polymer (polyamidoamine particles) and a mineral (calcium carbonate).

The thermogravimetric analyzer measurements were taken under the analysis conditions of a temperature range of 100 to 650°C, maintenance at 100°C for 10 minutes for removing moisture, and then heating to 650°C at a heating rate of 10°C/min. In addition, oxygen was injected at a rate of 40 ml/min for an oxidation reaction. While heating to 650°C, the polyamidoamine particles which are an organic polymer were oxidized in a range of about 200 to 400°C, and only inorganic materials such as calcium carbonate (CaCO3) formed on the surface of the polyamidoamine particles remain. From 600°C, calcium carbonate (CaCO3) is also separated in the form of CaO and starts thermal decomposition.

Thus, though the polymer was thermally decomposed, 550°C which was the temperature before CaCO3 was thermally decomposed was taken as a standard, the amount of calcium carbonate remaining at a temperature of 550°C and the amount of removed carbon dioxide per g of the used polyamidoamine particles were calculated in the TGA graph, and specifically, they were calculated from the following Equations 1 and 2:

[Equation 1]

$$\text{Amount of calcium carbonate particles} = W1 \times Ms$$

wherein W1 is a value of wt% of calcium carbonate remaining at 550°C at a TGA peak, and Ms is mass of composite particles obtained after mineralization, in which Ms is calculated by M0/(1-W1), and Mo is mass of polyamidoamine particles added before mineralization,

[Equation 2]

$$\text{Amount of carbon dioxide per g of polyamidoamine particles}$$
$$= \left(\text{amount of calcium carbonate particles of Equation 1} \times \frac{44.0 \text{ g/mol}(CO_2)}{100.09 \text{ g/mol }(CaCO_3)}\right) /$$

$$M0$$

wherein M0 is mass of polyamidoamine particles added before mineralization.

In addition, an average carbon dioxide removal amount per hour was calculated from the following Equation 3, and a carbon dioxide removal rate per hour showing a carbon dioxide removal speed was calculated from the following Equation 4:

Total amount of carbon dioxide per g of polyamidoamine particles / total residence time        [Equation 3]

[Equation 4]

$$\text{Removal rate per hour (\%)} = \left(\frac{M_{CO2}(t2) - M_{CO2}(t1)}{M_{CO2}(t1)}\right) \times 100$$

wherein MCO2(t1) and MCO2(t2) are amounts of carbon dioxide per g of polyamidoamine particles according to Equation 2 at each of residence times t1 and t2.

2. Amount of mineralized carbon dioxide in sea water

Concentrations of a calcium cation and a carbonate anion in sea water were measured using ICP-OES (inductively coupled plasma, Thermo Scientific, iCA P6300) and ion chromatography, and the amount of calcium carbonate particles ($CaCO_3$) produced by the polyamidoamine particles was calculated by the following Equation 5:

[Equation 5]

Amount of calcium carbonate particles ($CaCo_3$) produced per 1 L of sea water

(mg/L)

$$= \text{difference in calcium concentration (ppm)} \times \frac{100.09 \text{ g/mol}(CaCO_3)}{40.08 \text{ g/mol (Ca)}}$$

wherein difference in calcium concentration is a value obtained by subtracting a calcium concentration in sea water before mineralization from a calcium concentration in sea water after mineralization, and when a difference in calcium concentration over time is required, it may be a value obtained by subtracting a calcium concentration in sea water before mineralization for a certain period of time from a calcium concentration in sea water after mineralization for a certain period of time.

[Preparation Example 1]

0.6 g (10 mmol) of ethylene diamine (EDA) and 1.541 g (10 mmol) of N,N'-methylene bisacrylamide (MBA) were added in equal molar ratios to a 1-neck round flask, 4 mL of distilled water was added thereto, and stirring was performed until they became a uniform mixture.

0.02 g of Span 60 (sorbitan monostearate) was dissolved in 16 mL of toluene and added to a round bottom flask with the prepared precursor aqueous solution, a reaction was carried out at 45°C for 3.5 hours with nitrogen blowing, and the product was washed with methanol and filtered. The obtained particles were dried under vacuum at 60°C for 24 hours.

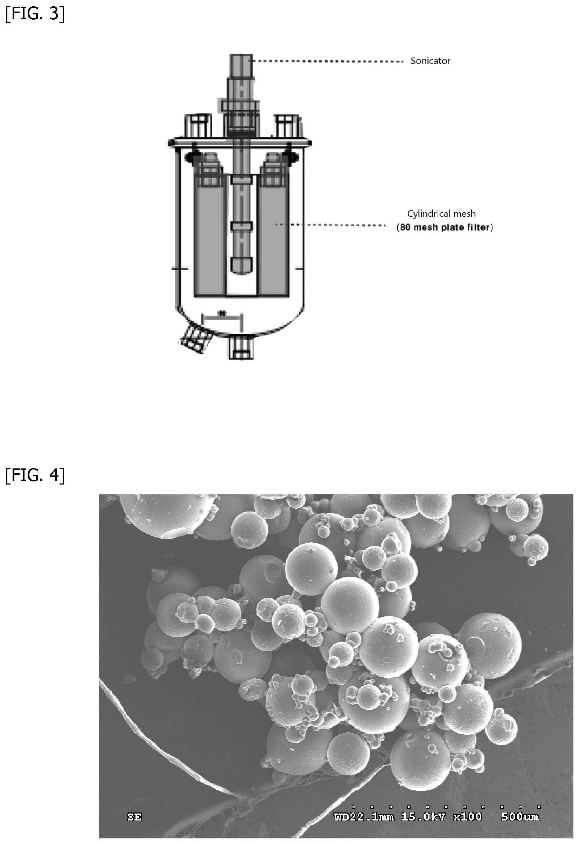

The crosslinked polyamidoamine particles of Preparation Example 1 had an average particle diameter of 51.49 μm as measured by Mastersizer 2000 and a PDI of 1.02. An image of the surface of the particles analyzed by SEM is shown in FIG. 4.

[Preparation Example 2]

Polyamidoamine particles were prepared in the same manner as in Preparation Example 1, except that 1,4-butanediamine (BDA) was added at the same moles instead of EDA.

[Preparation Example 3]

Polyamidoamine particles were prepared in the same manner as in Preparation Example 1, except that hexamethylenediamine (HDA) was added at the same moles instead of EDA.

[Preparation Example 4]

Polyamidoamine particles were prepared in the same manner as in Preparation Example 1, except that Diethylenetriamine (DETA) was added at the same moles instead of EDA.

[Preparation Example 5]

Polyamidoamine particles were prepared in the same manner as in Preparation Example 1, except that tris(2-aminoethyl)amine (TAEA) was added at the same moles instead of EDA.

100 mg of polyamidoamine particles according to Preparation Examples 1 to 5 were immersed in 1000 mL of sea water having a pH of 8.10 to 8.50, a Ca2+ concentration of 450 mg/L, and a CO3- concentration of 150 mg/L and allowed to stand at room temperature of 20°C for 3 days, and the particle surface and sea water concentration change before and after leaving were observed.

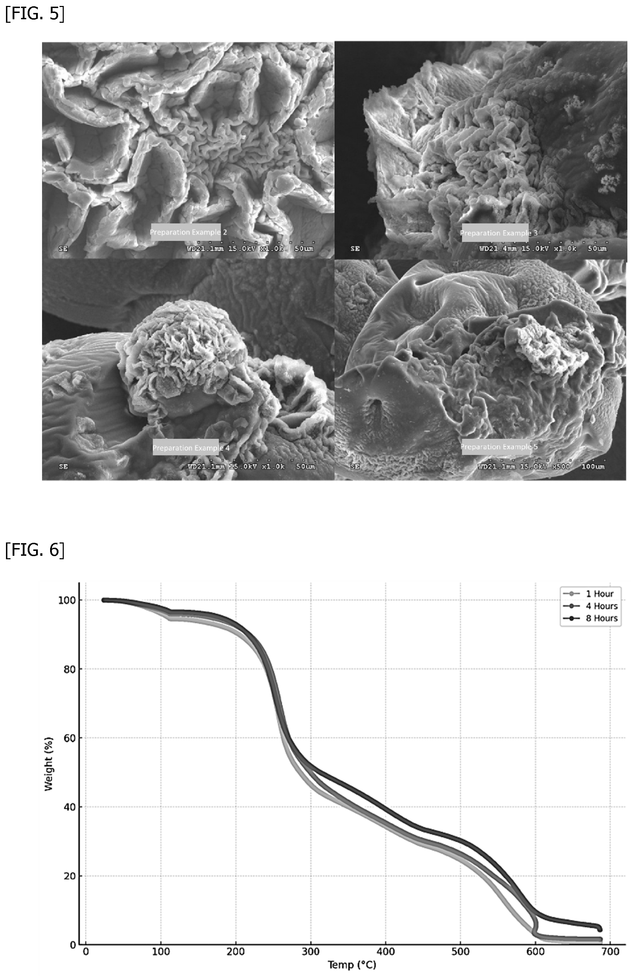

The particle surface was analyzed by a scanning electron microscope (SEM), and measurement was performed using sea water concentration change ICP-OES (inductively coupled plasma) and ion chromatography. The measured SEM image is shown in FIG. 5, the sea water concentration change is recorded in the following Table 1, and the amount (mg/L) of calcium carbonate particles ($CaCO_3$) produced per 1 L of sea water calculated by [Equation 3] from the sea water concentration change is shown in the following Table 1:

[Table 1]

| | Initial | Preparation Example 1 | Preparation Example 2 | Preparation Example 3 | Preparation Example 4 | Preparation Example 5 |
|---|---|---|---|---|---|---|
| Caldum ion concentration | 450 ppm | 306 ppm | 55 ppm | 292 ppm | 286 ppm | 273 ppm |
| Carbonate ion concentration | 150 ppm | Less than 5 ppm | Less than 5 ppm | Less than 5 ppm | Less than 5 ppm | Less than 5 ppm |
| Amount of caldum carbonate particle ($CaCO_3$) | - | 359.6 mg/L | 986.4 mg/L | 394.6 mg/L | 409.6 mg/L | 442.0 mg/L |

As shown in Table 1, it was confirmed that the calcium ion and carbonate ion concentrations in sea water were effectively decreased using the polyamidoamine particles according to Preparation Examples 1 to 5. In particular, the polyamidoamine particles using butenediamine of Preparation Example 2 showed a higher removal rate and a larger amount of calcium carbonate particles than the other preparation examples and were confirmed to show excellent performance.

20 g of the polyamidoamine particles prepared in Preparation Examples 1 to 5 were filled into a 2.6 L central empty cylindrical filter manufactured with disclosed 80 mesh plate to prepare a filter, and the filter was mounted in a 4 L reactor disclosed in FIG. 3.

[Example 1]

Artificial sea water having a pH of 8.10 to 8.50 and concentrations of $Na^+$: 9300-9700 (mg/L), $Mg^{2+}$: 1400-1450 (mg/L), $K^+$: 360-410 (mg/L), $Ca^{2+}$: 430-450 (mg/L), $Sr^{2+}$: 9.0-10.50 (mg/L), $Rb^{2+}$: 0.11-0.13 (mg/L), Fe: 0.06-0.20 (mg/L), $Li^+$: 0.14-0.16 (mg/L), $Cl^-$: 17300-17800 (mg/L), $SO_4^{2-}$: 2260-2550 (mg/L), $CO_3^-$: 130-150 (mg/L), $Br^-$: 20-40 (mg/L), $F^-$: 0.8-1.1 (mg/L), and B: 4.0-6.0 (mg/L) was prepared as sea water.

A reactor equipped with the filter filled with the polyamidoamine particles prepared in Preparation Example 1 was used, and the artificial sea water was provided as supply water and a pump was operated in a continuous system as shown in the diagram disclosed in FIG. 1.

Specifically, 12 L of the supply water was passed through a reactor and a storage tank in sequence at a flow rate of 1 L/h and discharged as effluent water in a supply tank by a pump, and the reaction (mineralization) was carried out under the conditions of a total operation time (residence time) of 8 hours and a weight hourly space velocity (WHSV) of 50/hr. The supply water was continuously introduced from the supply tank to the reactor, and when the capacity of the reactor was full, it was transferred from the reactor to the storage tank. Polyamidoamine-calcium carbonate composite particles in which calcium carbonate was formed on the surface of the polyamidoamine particles in the filter were sampled at 1st hour, 4th hour, and 8th hour for a total operation time of 8 hours, washed, dried in a 60°C oven for 12 hours, and analyzed.

At this time, the reactor was an upflow reactor and had a structure in which the supplied material was injected from the lower portion of the reactor, the reaction proceeded while the material moved upward, and the material after the reaction was discharged through the upper outlet.

In addition, the supply tank and the storage tank had a capacity of 20 L and a size of 200 mmDia×600 mmL. Since the reactor was provided with a mineral collection tank connected to a separate connection pipe, produced calcium carbonate (CaCO3) may be stored. The mineral collection tank also had the same capacity and size as the supply tank.

The sampled polyamidoamine-calcium carbonate composite particles were analyzed by XRD and TGA, and an area ratio of a peak corresponding to calcite-type calcium carbonate (29.2° to 29.6°) to the total peak area of calcium carbonate in an XRD graph was calculated to calculate the content ratio of calcite-type calcium carbonate in the calcium carbonate formed on the surface of the composite particles. It was confirmed that calcite-type calcium carbonate was formed at 11.97% in the sample at 1st hour, at 11.94% in the sample at 4th hour, and at 12.91% in the sample at 8th hour, and thus, it was found that the longer the residence time is, the higher the content of calcite-type calcium carbonate is.

[Example 2]

The process was carried out in the same manner as in Example 1, except that a reactor having an ultrasonic grinder mounted inside was used as shown in FIG. 3. Specifically, the ultrasonic grinder was mounted close to the upper portion, the outlet portion of the reactor, and continuously operated under the conditions of an amplitude of 45%, a time of 20 minutes, a pulse of 10 seconds of operation, and then 5 seconds of pause.

[Example 3]

The process was carried out in the same manner as in Example 1, except that the flow rate of the supply water was 2 L/h and the total operation time (residence time) was 4 hours, not 8 hours of reaction.

[Example 4]

The process was carried out in the same manner as in Example 1, except that the polyamidoamine particles prepared in Preparation Example 2 were used instead of the polyamidoamine particles prepared in Preparation Example 1.

The TGA analysis graph of the composite particles for capturing carbon dioxide which were calcium carbonate-formed polyamidoamine particles obtained in the filter over time in Example 1 is shown in FIG. 6. As shown in FIG. 6, it was confirmed that as the residence time passed, the calcium carbonate content was increased.

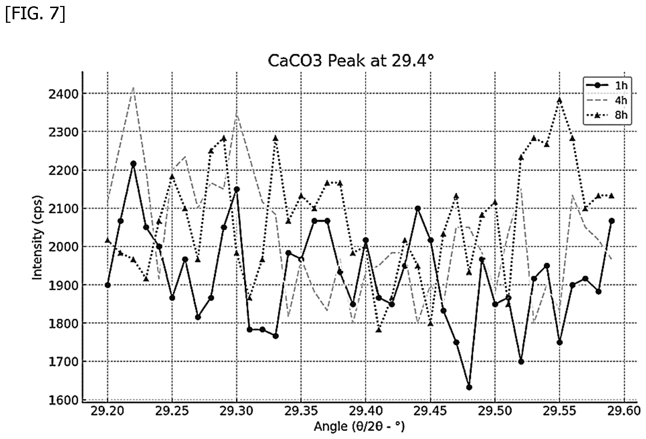

The XRD analysis graph of the composite particles for capturing carbon dioxide which were calcium carbonate-formed polyamidoamine particles obtained in the filter over time in Example 1 is shown in FIG. 7.

The amount of calcium carbonate particles as the amount of carbon dioxide ($M_{CO2}$) captured per g of the polyamidoamine particles calculated from Equations 1 and 2 through the TGA analysis graph of the composite particles for capturing carbon dioxide obtained in the filter after the mineralization reaction was completed in Examples 1 to 4 is shown in the following Table 2. In addition, the amount of carbon dioxide removed per 24 hours ($M_{CO2-24h}$) with respect to 100 g of the polyamidoamine particles was calculated by the following Equation 6 and is shown in the following Table 2.

[Equation 6]

$$M_{CO2-24h} = [(M_{CO2})\times100]/\text{residence time}\times24\text{ hr}$$

[Table 2]

|  | $M_{CO2}$ | $M_{CO2-24h}$ |
|---|---|---|
| Example 1 | 0.1172 g/g | 35.16 g |
| Example 2 | 0.1274 g/g | 38.24 g |
| Example 3 | 0.1197 g/g | 71.82 g |
| Example 4 | 0.1258 g/g | 37.74 g |

As seen in Table 2, it was confirmed that in the continuous preparation method of composite particles for capturing carbon dioxide according to an exemplary embodiment, carbon dioxide was continuously mineralized to prepare composite particles for capturing carbon dioxide. In addition, it was confirmed that when concentrated water having a calcium ion concentration of 786 mg/L was used instead of artificial sea water, activity of particles was increased to increase calcium ion removal rate by 3 times or more, and thus, the amount of produced calcium carbonate and the amount of removed carbon dioxide were also increased.

In particular, when the flow rate or the residence time was adjusted, a higher flow rate showed a better resulting value, and also, Example 4 using butenediamine showed better results than Example 1. In particular, Example 2 using a filter equipped with an ultrasonic grinder showed excellent carbon dioxide removal amount and life characteristics, Example 3 showed the highest $M_{CO2-24h}$ value, but its replacement cycle was shorter than Example 2, and overall, it was confirmed that the continuous preparation process of Example 2 showed the best work efficiency and economic feasibility.

Hereinabove, although the present invention has been described by specified matters and specific exemplary embodiments, they have been provided only for assisting in the entire understanding of the present invention. Therefore, the present invention is not by the specific matters limited to the exemplary embodiments. Various modifications and changes may be made by those skilled in the art to which the present invention pertains from this description.

Therefore, the spirit of the present invention should not be limited to the above-described exemplary embodiments, and the following claims as well as all modifications equal or equivalent to the claims are intended to fall within the scope and spirit of the invention.

## Claims

1. A method for continuously producing carbon dioxide-capturing composite particles including a process of using seawater as usable water, the method comprising:
   bringing supply water or discharge water of the process into contact with polyamidoamine particles.

2. The method for continuously producing carbon dioxide-capturing composite particles of claim 1, wherein the bringing of supply water or discharge water into contact with polyamidoamine particle includes:

   (a) bringing the supply water or discharge water into contact with the polyamidoamine particles; and
   (b) forming calcium carbonate particles from calcium ions and carbonate ions in the supply water or discharge water on a surface of the polyamidoamine particles.

3. The method for continuously producing carbon dioxide-capturing composite particles of claim 1, wherein the supply water or discharge water includes calcium ions and magnesium ions.

4. The method for continuously producing carbon dioxide-capturing composite particles of claim 1, wherein the supply water or discharge water includes the calcium ion at a concentration of 0.1 g/L or more.

5. The method for continuously producing carbon dioxide-capturing composite particles of claim 1, wherein the polyamidoamine particles are crosslinked particles produced from a multifunctional amine monomer having at least two amine groups and a multifunctional acrylamide monomer having at least two acryl groups.

6. The method for continuously producing carbon dioxide-capturing composite particles of claim 5, wherein the polyamidoamine particles are produced by reacting the multifunctional amine monomer and the multifunctional acrylamide monomer at a mole ratio of 1:0.8 to 2.5.

7. The method for continuously producing carbon dioxide-capturing composite particles of claim 6, wherein the multifunctional amine monomer contains two primary amine groups and the multifunctional acrylamide monomer contains two acryl groups.

8. The method for continuously producing carbon dioxide-capturing composite particles of claim 1, wherein the contact is performed by any one selected from the following methods:

   (i) filtering the supply water or discharge water in a column filled with the polyamidoamine particles,
   (ii) dispersing the polyamidoamine particles in the supply water or discharge water, and
   (iii) floating the polyamidoamine particles on the surface of the supply water or discharge water.

9. The method for continuously producing carbon dioxide-capturing composite particles of claim 8, wherein the column is filled with the polyamidoamine particles at a density of 1 to 50 g/m$^3$.

10. The method for continuously producing carbon dioxide-capturing composite particles of claim 8, wherein the contact satisfies a weight hourly space velocity (WHSV) depending on an amount of the polyamidoamine particles in a range of 5 to 10000/hr.

11. The method for continuously producing carbon dioxide-capturing composite particles of claim 1, wherein the polyamidoamine particles have a particle size of 10 to 1000 $\mu$m.

12. The method for continuously producing carbon dioxide-capturing composite particles of claim 1, wherein in the bringing of supply water or discharge water into contact with polyamidoamine particles, injecting carbon dioxide into the supply water or discharge water is further carried out.

13. The method for continuously producing carbon dioxide-capturing composite particles of claim 2, wherein polyamidoamine-calcium carbonate composite particles in which calcium carbonate particles are formed on the surface of the polyamidoamine particles are formed by (b).

14. The method for continuously producing carbon dioxide-capturing composite particles of claim 2, wherein after (b), removing the calcium carbonate from the surface with an ultrasonic grinder is further carried out.

15. The method for continuously producing carbon dioxide-capturing composite particles of claim 2, wherein an amount of carbon dioxide ($M_{CO2-24h}$) removed per 24 hours with respect to 100 g of the polyamidoamine particles is 1 g/24 h or more.

16. The method for continuously producing carbon dioxide-capturing composite particles of claim 1, wherein the process includes any one or more selected from the group consisting of a sea water desalination process, an industrial cooling water process, an aquaculture process, and an agricultural irrigation process.

17. An automotive reinforcement comprising carbon dioxide-capturing composite particles produced by the method for continuously producing carbon dioxide-capturing composite particles of any one of claims 1 to 16.

18. Building cement comprising carbon dioxide-capturing composite particles produced by the method for continuously producing carbon dioxide-capturing composite particles of any one of claims 1 to 16.

[FIG. 1]

[FIG. 2]

[FIG. 3]

[FIG. 4]

[FIG. 5]

[FIG. 6]

[FIG. 7]

CaCO3 Peak at 29.4°

## INTERNATIONAL SEARCH REPORT

International application No.

**PCT/KR2024/013449**

| A. | CLASSIFICATION OF SUBJECT MATTER |
|---|---|

**B01D 15/10**(2006.01)i; **C02F 1/46**(2006.01)i; **C08G 73/02**(2006.01)i

According to International Patent Classification (IPC) or to both national classification and IPC

| B. | FIELDS SEARCHED |
|---|---|

Minimum documentation searched (classification system followed by classification symbols)

B01D 15/10(2006.01); B01D 53/02(2006.01); B01D 53/62(2006.01); B01J 20/22(2006.01); B01J 20/26(2006.01); B01J 20/28(2006.01); B01J 20/30(2006.01); C01F 11/02(2006.01); C01F 11/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이산화탄소(carbon dioxide, CO2), 포집(capture), 폴리아미도아민 입자 (polyamidoamine particle), 탄산칼슘(calcium carbonate, CaCO3), 해수(seawater), 담수화(desalination)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-1967508 B1 (KOREA ADVANCED INSTITUTE OF SCIENCE AND TECHNOLOGY) 09 April 2019 (2019-04-09)<br>   See paragraph [0019]; and claims 1, 8 and 14. | 1-18 |
| A | CHOI, H. et al. Synthesis and CO2 Capture of Porous Hydrogel Particles Consisting of Hyperbranched Poly(amidoamine)s. Gels. 11 August 2022, vol. 8, no. 8, document no. 500, pp. 1-9.<br>   See abstract; and scheme 1. | 1-18 |
| A | BANG, J.-H. et al. CO2 Mineralization Using Brine Discharged from a Seawater Desalination Plant. Minerals. 2017, vol. 7, no. 11, document no. 207, pp. 1-12.<br>   See abstract. | 1-18 |
| A | KR 10-2453047 B1 (INDUSTRY-ACADEMIC COOPERATION FOUNDATION, YONSEI UNIVERSITY) 11 October 2022 (2022-10-11)<br>   See claims 1-10. | 1-18 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 December 2024** | **10 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 775 287 A1**

## INTERNATIONAL SEARCH REPORT

| International application No. |
|---|
| **PCT/KR2024/013449** |

### C. DOCUMENTS CONSIDERED TO BE RELEVANT

| Category* | Citation of document, with indication, where appropriate, of the relevant passages | Relevant to claim No. |
|---|---|---|
| A | TANAKA, Y. et al. Synthesis of calcium carbonate particles with carboxylic-terminated hyperbranched poly(amidoamine) and their surface modification. Polymer Journal. 2012, vol. 44, pp. 586-593.<br>See page 587, figure 1. | 1-18 |
| A | KR 10-1524457 B1 (KOREA INSTITUTE OF ENERGY RESEARCH) 01 June 2015 (2015-06-01)<br>See claims 6-11. | 1-18 |
| A | ZHAO, D. et al. A Dendrimer-Based Forward Osmosis Draw Solute for Seawater Desalination. Ind. Eng. Chem. Res. 2014, vol. 53, pp. 16170-16175.<br>See abstract. | 1-18 |
| PX | WO 2024-101538 A1 (POSTECH RESEARCH AND BUSINESS DEVELOPMENT FOUNDATION) 16 May 2024 (2024-05-16)<br>See entire document. | 1-8,11,13,15,16 |

Form PCT/ISA/210 (second sheet) (July 2022)

**INTERNATIONAL SEARCH REPORT**
Information on patent family members

International application No.

**PCT/KR2024/013449**

| Patent document cited in search report | | | Publication date (day/month/year) | Patent family member(s) | | | Publication date (day/month/year) |
|---|---|---|---|---|---|---|---|
| KR | 10-1967508 | B1 | 09 April 2019 | KR | 10-2018-0006147 | A | 17 January 2018 |
| | | | | US | 10010861 | B2 | 03 July 2018 |
| | | | | US | 2018-0008958 | A1 | 11 January 2018 |
| KR | 10-2453047 | B1 | 11 October 2022 | KR | 10-2022-0063429 | A | 17 May 2022 |
| KR | 10-1524457 | B1 | 01 June 2015 | KR | 10-2015-0030980 | A | 23 March 2015 |
| WO | 2024-101538 | A1 | 16 May 2024 | KR | 10-2024-0065887 | A | 14 May 2024 |
| | | | | US | 2024-0149244 | A1 | 09 May 2024 |

Form PCT/ISA/210 (patent family annex) (July 2022)